# EUROPÄISCHE PATENTSCHRIFT

(11) **EP 3 327 326 B1**
(45) Veröffentlichungstag und Bekanntmachung des Hinweises auf die Patenterteilung: **19.08.2020**
(21) Anmeldenummer: 17203700.4
(22) Anmeldetag: 27.11.2017
(51) Int. Cl.: F16L 3/237, H02G 3/32, F16L 3/10

(54) **SCHELLE FÜR DAS FESTLEGEN VON ROHREN ODER KABELN**
CLAMP FOR PREDETERMINING PIPES OR CABLES
COLLIER DE SERRAGE POUR LA FIXATION DE TUYAUX OU DE CÂBLES

(30) Priorität: 25.11.2016 DE 102016122798
(43) Veröffentlichungstag der Anmeldung: 30.05.2018
(73) Patentinhaber: Nieberding, Fabian, 49439 Steinfeld (DE)
(72) Erfinder: Nieberding, Fabian, 49439 Steinfeld (DE)
(74) Vertreter: Jabbusch, Matthias

(56) Entgegenhaltungen:
- EP-A2- 2 000 787
- DE-U1-202011 103 129
- GB-A- 2 240 807
- US-A1- 2005 006 535
- US-A1- 2009 189 026
- US-A1- 2012 135 633

## Beschreibung

Die Erfindung betrifft eine Schelle für das Festlegen von Rohren oder Kabeln an einer Unterlage oder aneinander, umfassend ein erstes an die Rohre oder Kabel anlegbares Ankerbauteil, bei der wenigstens ein Anlagebauteil vorgesehen ist, das mit dem Ankerbauteil durch Annährung an dieses in haltende Anlage bringbar ist, wobei die Annährungsweise des Anlagebauteils an das Ankerbauteil wahlweise ausbildbar ist und wobei das Anlagebauteil ein vom Ankerbauteil separates Bauteil ist, wobei das Ankerbauteil einstückig ist und zwei Einschubtaschen für Anlagebauteile hat und jedes Anlagebauteil als ein in eine Einschubtasche einschiebbares Schubstück ausgebildet ist und die Einschubtaschen des Ankerbauteils und die Schubstücke mit Rastelementen ausgerüstet sind, wobei das Ankerbauteil im Bereich der Einschubtaschen Zahnreihen als Rastelemente aufweist, wobei die Zahnreihen parallel zur Einschubrichtung des jeweiligen Schubstücks ausgerichtet sind und den Schubstücken Zähne als Rastelemente zugeordnet sind, die mit den Zahnreihen in Wirkverbindung treten können, und die Zähne des Schubstücks auf Federn gelagert sind.

In verschiedenen Vorrichtungen, Anlagen oder auf Fahrzeugen werden Rohre oder Kabel verlegt. Es kann sich um hydraulische oder pneumatische Leitungen handeln, um Kabel eines Kabelbaums oder auch um Hausinstallationskabel. Regelmäßig werden Schellen verwendet, um Rohre oder Kabel zusammenzufassen und/oder um Rohre oder Kabel an Unterlagen zu befestigen. Diese Unterlagen können Raumwände, Maschinen oder auch Fahrzeugchassis-Bauteile sein.

Bekannte Schellen weisen ein Ankerbauteil auf, das an der Unterlage oder an einem ersten Rohr oder Kabel befestigbar ist. Ein zweites Bauteil kann hinzugeführt werden, um Rohre oder Kabel zu umfassen und insofern schellenartig festzulegen.

Im Stand der Technik sind dabei verschiedene Schellen bekannt. Aus der AT 14217 U1 ist eine aus zwei Bauteilen ausgebildete Schelle dargestellt. Die CN 1044933 C zeigt eine Schelle mit zueinander verschwenkbaren Bauteilen, um Kabel oder Rohre aufzunehmen. Diese Schellen sind hinsichtlich der Weite ihrer Aufnahmen für Rohre oder Kabel festgelegt, so dass nur eine bestimmte Rohr- bzw. Kabelweite optimal aufnehmbar ist.

Eine gattungsgemäße Schelle ist zudem aus der DE 20 2011 103 129 U1 bekannt.

Der Erfindung liegt die Aufgabe zugrunde, eine Schelle der eingangs genannten Gattung aufzuzeigen, die für das Festlegen von Rohren oder Kabeln mit voneinander verschiedenen Weiten einsetzbar ist. Die Schelle soll dabei trotz der Aufnahme voneinander verschieden weiter Kabel oder Rohre gleiche Außenmaße aufweisen.

Diese Aufgabe ist erfindungsgemäß dadurch gelöst, dass jeder Feder ein Griffstück zugeordnet ist, erfindungsgemäß ist zwei Federn auch ein gemeinsames Griffstück zugeordnet.

Diese Griffstücke dienen zum manuellen Einwirken auf die Federn, um eine Ent- bzw. Belastung der Zähne des Schubstücks zu erreichen. Unter Entlastung der Zähne ist ein Schubstück aus dem Ankerbauteil vollständig entnehmbar.

Bei der erfindungsgemäßen Schelle ist gleichfalls ein Ankerbauteil vorgesehen. Dieses Ankerbauteil definiert die Schelle hinsichtlich ihrer Ausbildung, da erfindungsgemäß vorgesehen ist, dass das Anlagebauteil ein vom Ankerbauteil separates Bauteil ist.

Um die Schelle auszubilden, wird dieses Anlagebauteil an das Ankerbauteil angenähert und in haltende Anlage gebracht. Die Annährungsweite ist dabei wahlweise ausbildbar, wodurch es ermöglicht ist, verschieden weite Rohre oder Kabel mit Ankerbauteil und Anlagebauteil aufzunehmen.

Nach der Erfindung ist vorgesehen, dass das Ankerbauteil einstückig ist und zwei Einschubtaschen für Anlagebauteile hat. Die Einstückigkeit des Ankerbauteils vereinfacht dessen Herstellung, es kann sich beispielsweise um ein Spritzgussbauteil aus Kunststoff handeln. Die beiden Einschubtaschen bilden Einlegemöglichkeiten für Rohre oder Kabel aus. Es ist möglich, mehrere Ankerbauteile übereinander anzuordnen, um so mehr als zwei Rohre oder Kabel aufnehmen zu können.

In einer Einschubtasche ist das Anlagebauteil unterzubringen. Die Erfindung sieht vor, dass jedes Anlagebauteil als ein in eine Einschubtasche einschiebbares Schubstück ausgebildet ist. Das separate Schubstück kann mehr oder weniger weit in die Einschubtasche eingeschoben werden, um kleinere oder größere Rohre oder Kabel festzulegen.

Die Einschubtaschen des Ankerbauteils und die Schubstücke sind mit Rastelementen ausgerüstet. Die Rastelemente können ineinandergreifen, wodurch eine Festlage des Schubstückes in einer bestimmten Schiebeposition ermöglicht ist. Die Rohre oder Kabel sollen mit der erfindungsgemäßen Schelle für längere Zeit festgelegt werden.

Von Kabelbindern sind Zahnreihen als Rastelemente bekannt. Auch die erfindungsgemäße Schelle nutzt derartige Zahnreihen, da die Erfindung vorsieht, dass das Ankerbauteil im Bereich der Einschubtaschen Zahnreihen als Rastelemente aufweist, wobei die Zahnreihen parallel zur Einschubrichtung des jeweiligen Schubstücks ausgerichtet sind. Ein Schubstück wird parallel zu der Ausrichtung der Rastelemente in die Einschubtasche eingeschoben. Das Schubstück kann dabei auf die Rastelemente zugreifen und eine Festlegung in einer bestimmten Verschiebestellung erreichen.

So ist nach der Erfindung vorgesehen, dass den Schubstücken Zähne als Rastelemente zugeordnet sind, die mit den Zahnreihen in Wirkverbindung treten können. Die Zähne des Schubstücks sind dabei vorzugsweise auf Federn gelagert, so dass eine Belastung bzw. Entlastung der Zähne möglich ist. Die Entlastung der Zähne erfolgt vorzugsweise dann, wenn ein Verschieben des Schubstückes durchgeführt wird. Hat dieses seine Endposition erreicht, in der ein Kabel oder ein Rohr fixiert ist, werden die Zähne des Schubstücks belastet, so dass sie mit den Zahnreihen des Ankerbauteils in haltende Wirkverbindung treten können.

Nach einer ersten Weiterbildung der Erfindung ist vorgesehen, dass mit dem Ankerbauteil zumindestens zwei Anlagebauteile in Verbindung bringbar sind. Auf diese Weise können mit der Schelle zwei Rohre oder Kabel festgelegt werden, dabei können die Rohre oder Kabel auch voneinander verschiedene Durchmesser haben.

Zur einfachen Herstellung der erfindungsgemäßen Schelle ist vorgesehen, dass das Anlagebauteil mit Federn und Griffstücken einstückig ausgebildet ist. Auch hier kann es sich um ein entsprechendes Spritzgussbauteil aus Kunststoff handeln.

Zur weiteren Ausbildung der Erfindung ist vorgesehen, dass mit Rohren oder Kabeln in Anlage kommende Abschnitte des Ankerbauteils sowie der Anlagebauteile mit einem weicheren Kunststoff belegt sind. Diese Abschnitte können sich somit an das zu haltende Rohr bzw. zu haltende Kabel anschmiegen. Dadurch gelingt eine bessere Festlegung.

Zur weiteren Ausbildung der Erfindung kann vorgesehen sein, dass ineinander zugekehrten Flächen von Einschubtasche und Schubstück formschlüssig ineinandergreifende Abschnitte angeordnet sind. Die einander zugekehrten Flächen von Schubstück und Einschubtasche sind regelmäßig flach ausgebildet, so dass beide Bauteile relativ zueinander bewegt werden können. Um diese Bewegung zu festigen und ein den Einfluss von Querkräften zu reduzieren, sieht diese Weiterbildung formschlüssig ineinandergreifende Abschnitte vor. Diese Abschnitte sind so angeordnet, dass sie der Schubbewegung des Schubstückes nicht entgegenstehen.

Dabei sind die ineinandergreifenden Abschnitte als Vertiefungen und Vorsprünge ausgebildet. Die Vertiefung kann die Bauform einer Kerbe haben, während der Vorsprung als in die Kerbe vorstehende Rippe ausgebildet ist.

Zur weiteren Ausbildung der Erfindung sieht eine Weiterbildung der Erfindung vor, dass in der Einschubtasche neben dem Schubstück wenigstens ein Trennelement für eine Mehrzahl festzulegender Rohre oder Kabel angeordnet ist. Die Schelle kann so dimensioniert sein, dass in ihren Einschubtaschen mehrere Rohre oder Kabel angeordnet und festgelegt werden können. Um diese Kabel oder Rohre geordnet abzulegen und auch voneinander zu separieren, können derartige Trennelemente vorgesehen sein. Ihre Bauform ist an die Maße der Einschubtasche angepasst.

Ausführungsbeispiele der Erfindung, aus denen sich weitere erfinderische Merkmale ergeben, sind in der Zeichnung dargestellt. Es zeigen:
- Figur 1:: eine perspektivische Ansicht einer erfindungsgemäßen Schelle;
- Figur 2:: eine Seitenansicht der Schelle gemäß Figur 1 mit aufgenommenen Rohren bzw. Kabeln;
- Figur 3:: eine perspektivische Ansicht eines Bauteils der Schelle gemäß Figur 1;
- Figur 4:: eine Seitenansicht eines weiteren Bauteils der Schelle gemäß Figur 1;
- Figur 5:: eine perspektivische Ansicht einer weiteren erfindungsgemäßen Schelle; und
- Figur 6 und Figur 7:: Seitenansichten der Schelle gemäß Figur 5.

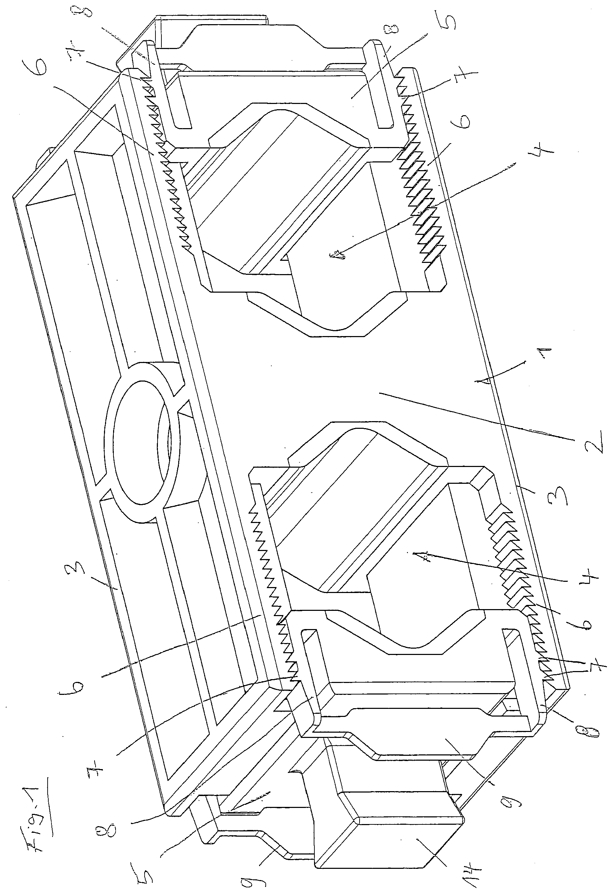

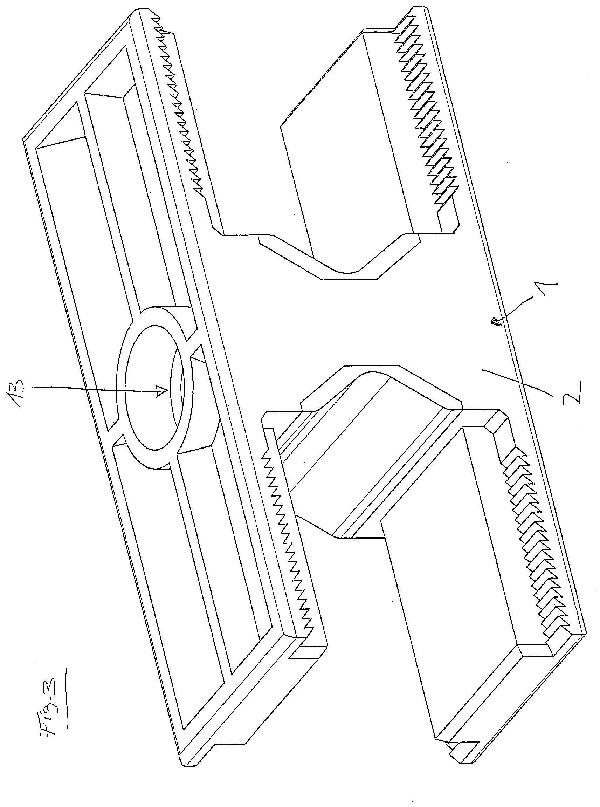

Die Schelle in Figur 1 weist ein Ankerbauteil 1 auf, das separat in Figur 3 gezeigt ist. Das Ankerbauteil 1 besitzt einen zentralen Block 2, der zwei parallel zueinander ausgerichtete und an einander gegenüberliegenden Seiten jeweils über den Block 2 hinaus vorstehende Plattenelemente 3 miteinander verbindet. Das Ankerbauteil 1 ist dabei aus dem Block 2 und den Plattenelementen 3 einstückig z. B. aus einem Kunststoff ausgebildet.

Durch die über den Block 2 jeweils hinaus vorstehenden Plattenelemente 3 werden Einschubtaschen 4 ausgebildet. Jede Einschubtasche 4 wird durch den Block 2 und die beiden Plattenelemente 3 eingegrenzt. Figur 1 zeigt, dass in jede Einschubtasche 4 ein Schubstück 5 eingeschoben ist. Das Schubstück 5 ist im Wesentlichen als Flächenelement ausgebildet, es hat eine Bauhöhe, die etwa dem Abstand zwischen den beiden Plattenelementen 3 entspricht. Das Schubstück 5 kann von jeder Seite in Richtung des Blocks 2 eingeschoben werden.

Ein eingeschobenes Schubstück 5 wird innerhalb des Ankerbauteils 1 fixiert. Dazu dienen Zahnreihen 6, welche den Einschubtaschen 4 zugeordnet sind und welche in die Plattenelemente 3 eingearbeitet sind. Die Schubstücke 5 weisen Zähne 7 auf, die mit den Zahnreihen 6 kämmen. Die Zähne 7 sind dabei durch bügelartig ausgebildete Federn 8 belastet. Eine Entlastung der Zähne 7 erfolgt durch einen manuellen Druck auf Griffstücke 9, die den Federn 8 zugeordnet sind. Ein Zusammenführen der beiden Griffstücke 9 ein und desselben Schubstücks 5 führt zu einer Entfernung der Federn 8 und damit der Zähne 7 aus der jeweiligen Zahnreihe 6, so dass das Schubstück 5 vom Ankerbauteil 1 vollkommen getrennt werden kann, es handelt sich um separate Bauteile.

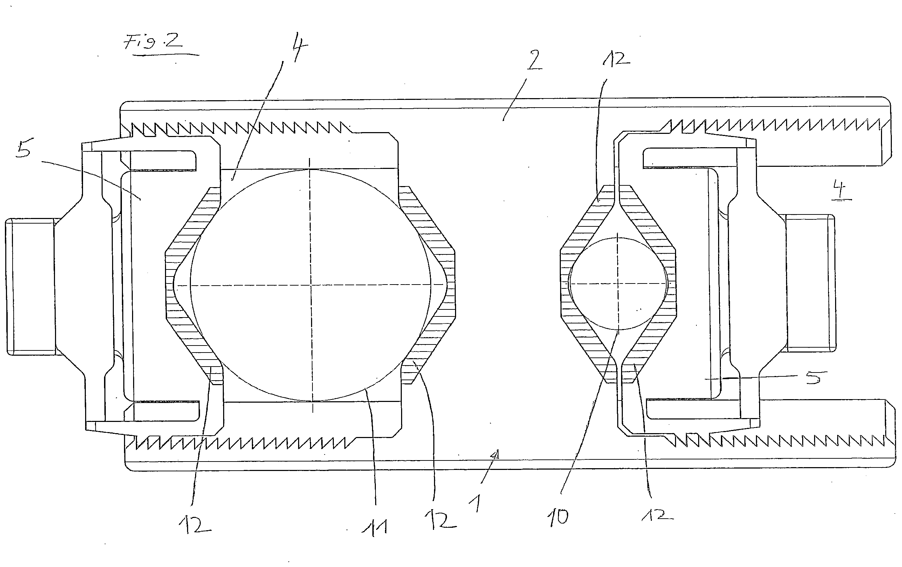

Figur 2 zeigt ein Ankerbauteil 1 mit eingeschobenen Schubstücken 5. Das rechts in der Zeichnung dargestellte Schubstück 5 ist weiter in die zugehörige Einschubtasche 4 eingeschoben als das andere Schubstück 5. Grund dafür sind die verschiedenen Durchmesser der in der Schelle aufgenommenen Rohre 10, 11. Das Rohr 10 hat einen geringeren Durchmesser, daher ist das Schubstück 5 weiter in die Einschubtasche 4 einzuführen. Das links in der Zeichnung dargestellte Rohr 11 hat einen großen Durchmesser, es kann aber gleichfalls mit der erfindungsgemäßen Schelle festgelegt werden. Sowohl im Ankerbauteil 1 als auch in den Schubstücken 5 sind die mit den Rohren 10, 11 in Anlage geratenen Abschnitte mit einem anderen Material 12 ausgerüstet. Bei diesem Material 12 handelt es sich um einen Kunststoff, der weicher ist als der für das Ankerbauteil 1 und die Schubstücke 5 verwendete Kunststoff.

Figur 3 zeigt noch, dass durch den Block 2 eine Bohrung 13 verläuft. Durch das Ankerbauteil 1 kann durch die Bohrung 13 hindurch ein Bolzen geführt werden. Ein derartiger Bolzen kann auch mehrere aufeinanderliegende Ankerbauteile 1 durchdringen, sofern ihre Bohrungen 13 in Deckungslage gebracht sind.

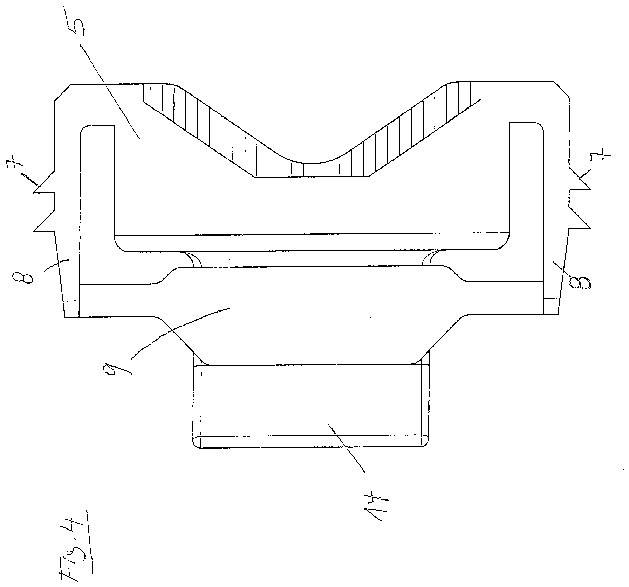

Figur 4 zeigt, dass das Schubstück 5 einstückig hergestellt ist. Die Zähne 7 stehen nach oben bzw. unten vor, sie sind an der Feder 8 befestigt. Diese sind über das Griffstück 9 miteinander verbunden. Zum Handhaben des Schubstücks 5 insgesamt ist noch ein Griffabschnitt 14 vorgesehen.

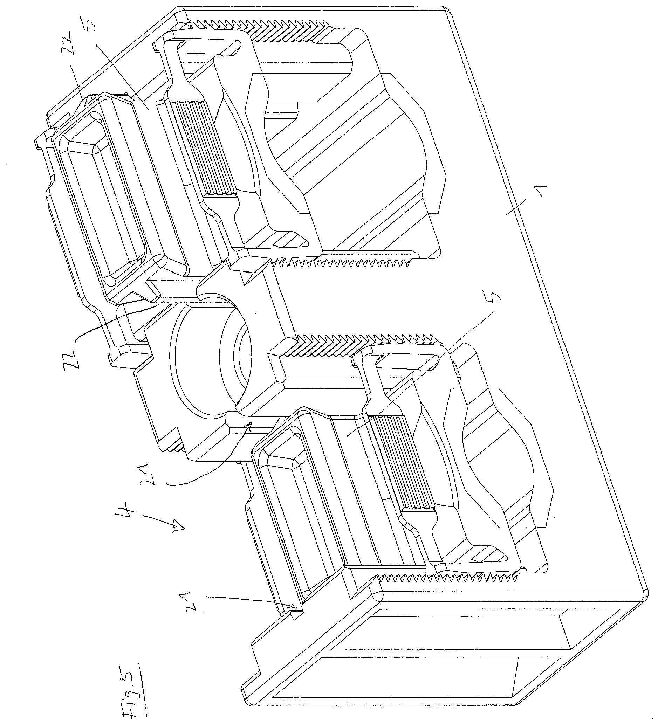

Bei dem Ausführungsbeispiel in Figur 5 sind in die Einschubtasche 4 begrenzende Flächen Vertiefungen 21 eingebracht. Die Schubstücke 5 weisen dagegen Vorsprünge 22 auf.

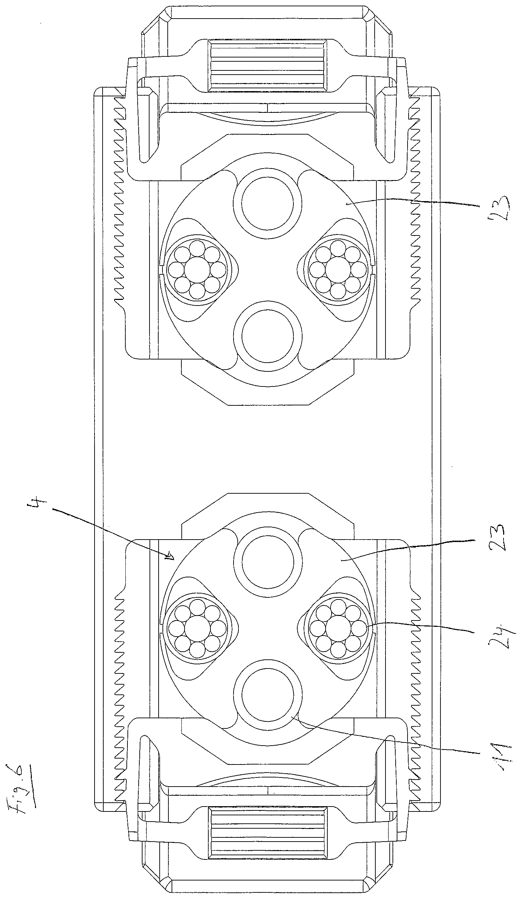

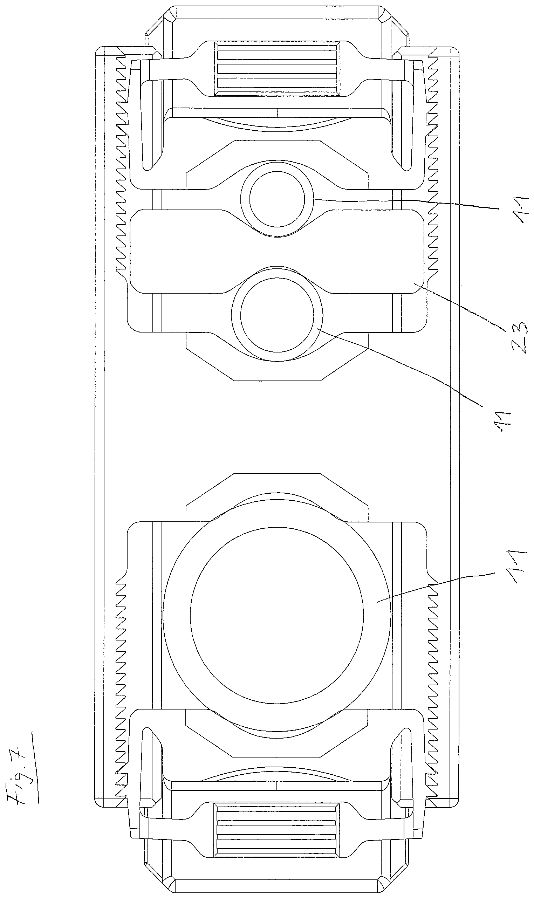

Die Seitenansichten der Schelle in Figuren 6 und 7 zeigen jeweils in den Einschubtaschen 4 aufgenommene Trennelemente 23. Die Trennelemente 23 können zylinderförmig oder auch stegförmig ausgebildet sein. Sie gestatten das geordnete Anordnen mehrerer Rohre 11 bzw. Kabel 24.

## Patentansprüche

1. Schelle für das Festlegen von Rohren oder Kabeln an einer Unterlage oder aneinander, umfassend ein erstes an die Rohre oder Kabel anlegbares Ankerbauteil (1), bei der wenigstens ein Anlagebauteil vorgesehen ist, das mit dem Ankerbauteil (1) durch Annährung an dieses in haltende Anlage bringbar ist, wobei die Annährungsweise des Anlagebauteils an das Ankerbauteil (1) wahlweise ausbildbar ist und wobei das Anlagebauteil ein vom Ankerbauteil (1) separates Bauteil ist, wobei das Ankerbauteil (1) einstückig ist und zwei Einschubtaschen (4) für Anlagebauteile hat und jedes Anlagebauteil als ein in eine Einschubtasche (4) einschiebbares Schubstück (5) ausgebildet ist und die Einschubtaschen (4) des Ankerbauteils (1) und die Schubstücke (5) mit Rastelementen ausgerüstet sind, wobei das Ankerbauteil (1) im Bereich der Einschubtaschen (4) Zahnreihen (6) als Rastelemente aufweist, wobei die Zahnreihen (6) parallel zur Einschubrichtung des jeweiligen Schubstücks (5) ausgerichtet sind und den Schubstücken (5) Zähne (7) als Rastelemente zugeordnet sind, die mit den Zahnreihen (6) in Wirkverbindung treten können, und die Zähne (7) des Schubstücks (5) auf Federn (8) gelagert sind,
**dadurch gekennzeichnet,**
**dass** zwei Federn (8) ein gemeinsames Griffstück (9) zugeordnet ist.

2. Schelle nach Anspruch 1, **dadurch gekennzeichnet, dass** mit dem Ankerbauteil (1) zumindest zwei Anlagebauteile in Anlage bringbar sind.

3. Schelle nach Anspruch 1 oder 2, **dadurch gekennzeichnet, dass** jeder Feder (8) ein Griffstück (9) zugeordnet ist.

4. Schelle nach Anspruch 3, **dadurch gekennzeichnet, dass** das Anlagebauteil mit Federn (8) und Griffstücken (9) einstückig ausgebildet ist.

5. Schelle nach einem der vorhergehenden Ansprüche, **dadurch gekennzeichnet, dass** das Ankerbauteil (1) und die Anlagebauteile aus einem Kunststoff gefertigt sind.

6. Schelle nach Anspruch 5, **dadurch gekennzeichnet, dass** mit Rohren (11, 12) oder Kabeln in Anlage kommende Abschnitte des Ankerbauteils (1) sowie der Anlagebauteile mit einem weicheren Kunststoff belegt sind.

7. Schelle nach einem der vorhergehenden Ansprüche, **dadurch gekennzeichnet, dass** in einander zugekehrten Flächen von Einschubtasche (4) und Schubstück (5) formschlüssig ineinandergreifende Abschnitte angeordnet sind, wobei die formschlüssig ineinandergreifenden Abschnitte als Vertiefungen (21) und Vorsprünge (22) ausgebildet sind.

8. Schelle nach einem der vorhergehenden Ansprüche, **dadurch gekennzeichnet, dass** in der Einschubtasche (4) neben dem Schubstück (5) wenigstens ein Trennelement für eine Mehrzahl festzulegender Rohre (11) oder Kabel (24) angeordnet ist.

## Claims

1. Bracket for fixing tubes or cables on a support or to one another, comprising a first anchor component (1) that is attachable to the tubes or cables, for which at least one attachment component is provided which can be attached in an enduring manner to the anchor component (1) by means of a movement toward the latter, wherein the manner in which the attachment component is moved toward the anchor component (1) can be configured in an elective manner and wherein the attachment component is a component separate from the anchor component (1), wherein the anchor component (1) is formed from one piece and has two insertion recesses (4) for attachment components and each attachment component is configured as a sliding element (5) which can be slid into an insertion recess (4) and the insertion recesses (4) of the anchor component (1) and the sliding elements (5) are equipped with latch elements, wherein the anchor component (1) has rows of teeth (6) as latch elements in the area of the insertion recesses (4), wherein the rows of teeth (6) are oriented parallel to the direction of insertion of the respective sliding element (5) and teeth (7) are allocated to the sliding elements (5) as latch elements which can enter into an operative connection with the rows of teeth (6), and the teeth (7) of the sliding element (5) are mounted on springs (8), **characterized in that** a common handle element (9) is associated with two springs (8).

2. The bracket according to claim 1, **characterized in that** at least two attachment components can be attached to the anchor component (1).

3. The bracket according to claim 1 or 2, **characterized in that** a handle element (9) is associated with each spring (8).

4. The bracket according to claim 3, **characterized in that** the attachment component is configured to be formed from one piece with springs (8) and handle elements (9).

5. The bracket according to one of the preceding claims, **characterized in that** the anchor component (1) and the attachment components are made from a plastic.

6. The bracket according to claim 5, **characterized in that** sections of the anchor component (1) as well as of the attachment components that come into contact with tubes (11, 12) or cables are coated with a softer plastic.

7. The bracket according to one of the preceding claims, **characterized in that** sections that mesh in a form-fitting manner are arranged in surfaces of the insertion recess (4) and sliding element (5) that face each other, wherein the sections meshing in a form-fitting manner are configured as depressions (21) and protrusions (22).

8. The bracket according to one of the preceding claims, **characterized in that** at least one separation element for a plurality of tubes (11) or cables (24) to be fixed is arranged in the insertion recess (4) next to the sliding element (5).

## Revendications

1. Collier de serrage, destiné à immobiliser des tuyaux ou des câbles sur un support ou l'un contre l'autre, comprenant un premier élément d'ancrage (1) susceptible d'être appuyé contre le tuyau ou le câble, sur lequel est prévu au moins un élément d'appui, qui est susceptible d'être amené en appui de maintien avec l'élément d'ancrage (1) par rapprochement avec celui-ci, le mode de rapprochement de l'élément d'appui à l'élément d'ancrage (1) étant réalisable de manière sélective et l'élément d'appui étant un élément séparé de l'élément d'ancrage (1), l'élément d'ancrage (1) étant conçu en monobloc et ayant deux poches d'insertion (4) pour des éléments d'appui et chaque élément d'appui étant conçu sous la forme d'une pièce d'insertion (5) insérable dans une poche d'insertion (4) et les poches d'insertion (4) de l'élément d'ancrage (1) et les pièces d'insertion (5) étant équipées d'éléments d'enclenchement, l'élément d'ancrage (1) comportant dans la région des poches d'insertion (4) des rangées de dents (6) en tant qu'éléments d'enclenchement, les rangées de dents (6) étant orientées à la parallèle de la direction d'insertion de la pièce d'insertion (5) en question, et aux pièces d'insertion (5) étant associées des dents (7) en tant qu'éléments d'insertion, qui sont susceptibles d'entrer en liaison active avec les rangées de dents (6) et les dents (7) de la pièce d'insertion (5) étant logées sur des ressorts (8), **caractérisé**
**en ce qu'**à deux ressorts (8) est associée une pièce de préhension (9) commune.

2. Collier de serrage selon la revendication 1, **caractérisé en ce qu'**au moins deux éléments d'appui sont susceptibles d'être amenés en appui avec l'élément d'ancrage (1).

3. Collier de serrage selon la revendication 1 ou 2, **caractérisé en ce qu'**à chaque ressort (8) est associée une pièce de préhension (9).

4. Collier de serrage selon la revendication 3, **caractérisé en ce que** l'élément d'appui est réalisé en monobloc avec des ressorts (8) et des pièces de préhension (9).

5. Collier de serrage selon l'une quelconque des revendications précédentes, **caractérisé en ce que** l'élément d'ancrage (1) et les éléments d'appui sont fabriqués en une matière plastique.

6. Collier de serrage selon la revendication 5, **caractérisé en ce que** des segments de l'élément d'ancrage (1) ainsi que des éléments d'appui entrant en contact avec des tuyaux (11, 12) ou des câbles sont garnis d'une matière plastique plus souple.

7. Collier de serrage selon l'une quelconque des revendications précédentes, **caractérisé en ce que** dans des surfaces qui se font face de la poche d'insertion (4) et de la pièce d'insertion (5) sont placés des segments s'engageant l'un dans l'autre par complémentarité de forme, les segments s'engageant l'un dans l'autre par complémentarité de forme étant réalisés sous la forme de creux (21) et de saillies (22) .

8. Collier de serrage selon l'une quelconque des revendications précédentes, **caractérisé en ce que** dans la poche d'insertion (4), à côté de la pièce d'insertion (5) est placé au moins un élément séparateur pour une pluralité de tuyaux (11) ou de câbles (24) qui doivent être immobilisés.
